# EUROPEAN PATENT APPLICATION

(11) **EP 2 447 226 A1**
(43) Date of publication of application: **02.05.2012**
(21) Application number: 10792119.9
(22) Date of filing: 23.06.2010
(51) Int. Cl.: C03B 23/025, B29C 33/06, G02B 3/00, G02C 13/00

(54) **PROCESS AND DEVICE FOR THE PRODUCTION OF MOLDED ARTICLE, AND PROCESS FOR THE PRODUCTION OF EYEGLASS LENS**

(30) Priority: 26.06.2009 JP 2009152424; 26.06.2009 JP 2009152427; 30.09.2009 JP 2009226208; 30.09.2009 JP 2009226209
(71) Applicant: Hoya Corporation, Tokyo 161-8525 (JP)
(72) Inventor: TAGUCHI, Noriaki, Tokyo 161-8525 (JP); TAKIZAWA, Shigeru, Tokyo 161-8525 (JP)
(74) Representative: Beckmann, Claus
(86) International application number: PCT/JP2010/060613
(87) International publication number: WO 2010/150801

(57) **Abstract**

An aspect of the present invention relates to a method of manufacturing a formed article forming an upper surface of a forming material comprised of a thermosoftening substance into a desired shape by heating the forming material in a state where the forming material is positioned on a forming surface of a forming mold to a temperature permitting deformation of the forming material to bring a lower surface of the forming material into tight contact with the forming surface. The heating is conducted by positioning the forming mold, on which the forming material has been positioned, beneath heat source(s) radiating radiant heat in a state where a plate-shaped member the outermost surface of which is comprised of a metal material is positioned above the upper surface of the forming material. Another aspect of the present invention relates to a method of manufacturing a formed article forming an upper surface of a forming material comprised of a thermosoftening substance into a desired shape by heating the forming material within a heating furnace in a state where the forming material is positioned on a forming surface of a forming mold to a temperature permitting deformation of the forming material to bring a lower surface of the forming material into tight contact with the forming surface. The forming is conducted while an exposed portion on the forming surface side of the forming mold on which the forming material has been positioned is covered with a covering member, and at least a portion of the covering member comprises a metal material layer.

## Description

### CROSS-REFERENCE TO RELATED APPLICATIONS

This application claims the benefit of priority to Japanese Patent Application No. 2009-152424 and Japanese Patent Application No.2009-152427 filed on June 26, 2009, and Japanese Patent Application No. 2009-226208 and Japanese Patent Application No. 2009-226209 filed on September 30, 2009, which are expressly incorporated herein by reference in their entirety.

### TECHNICAL FIELD

The present invention relates to a method of manufacturing a formed article hot sag forming method, and a forming device that can be employed in the above manufacturing method.
The present invention further relates to a method of manufacturing an eyeglass lens using the formed article that has been manufactured in the above manufacturing method or in the above forming device.

### BACKGROUND OF THE ART

In recent years, the demand has increased for multifocal eyeglass lenses being made thinner and lighter by incorporation of axially symmetric, aspherical lens design. Accordingly, the hot sag forming method has been proposed (see Japanese Unexamined Patent Publication (KOKAI) Heisei Nos. 6-130333 and 4-275930, which are expressly incorporated herein by reference in their entirety) as a method for forming casting molds to produce eyeglass lenses having such complex shapes.

The hot sag forming method is a forming method in which a forming material comprised of a thermosoftening substance such as glass is positioned on a mold, the forming material is softened by heating it to a temperature greater than or equal to its softening temperature, and the forming material is brought into tight contact with the mold to transfer the shape of the mold to the upper surface of the forming material, yielding a formed article of desired surface shape. For example, when forming a casting mold for eyeglass lenses, the upper surface of the forming material become a surface that will form an optical functional surface, and is thus required to have a high degree of surface precision. WO2007/063735 and English language family member US2009/289380A1, which are expressly incorporated herein by reference in their entirety, propose employing a covering member to cover the exposed portion on the forming surface side of the forming mold to prevent foreign matter, which may reduce surface precision, from contaminating the upper surface of the forming material.

The method described in WO2007/063735 can prevent foreign matter from scattering onto and contaminating the surface of the forming material without the use of large-scale clean room equipment. Thus, it is a good method permitting forming of the upper surface of the forming material with high precision without increasing manufacturing costs. However, research conducted by the present inventors has revealed that eyeglass lenses manufactured with the eyeglass lens-casting mold obtained by this method sometimes exhibit a new problem in the form of astigmatism that is unnecessary for eyeglass correction.

The present invention, devised to solve the above new problem, has for its object to provide a means for manufacturing a high-quality eyeglass lens in which astigmatism is inhibited or reduced.

To achieve the above object, the present inventors conducted extensive research into the causes of the problem in the method described in WO2007/063735, and made the following discovery.
The covering member temporarily retains and accumulates radiant heat from the heat source of the heating furnace. The forming material that has been positioned within the space (covered space) covered by the covering member is heated by radiant heat that is re-radiated by the covering member into the covered space. That is, radiant heat that is radiated by a heat source in the form of the various portions of the covering member heats the forming material.
On the other hand, WO2007/063735 describes the use of ceramics as the material of the covering member. However, ceramics are materials that are generally of low thermal conductivity. Thus, an extended period is required for the covering member itself to achieve a uniform temperature distribution. Accordingly, prior to achieving a uniform temperature distribution in the covering member itself, temperature varies in the various portions of the covering member, a state results resembling heating by multiple separate heat sources at different temperatures. This phenomenon appears in continuous heating furnaces in which various zones within the furnace are controlled to achieve different temperatures, and in heating furnaces in which partial heat sources are provided within the furnace. However, the fact that the heating state of the forming material varies greatly in various portions thereof may cause the timing with which the lower surface of the forming material and the forming surface of the forming mold come into tight contact to be off considerably in various in-plane portions. The present inventors discovered that this was what caused the astigmatism that was unnecessary in eyeglass correction in eyeglass lenses that were molded with the casting mold obtained.
Accordingly, the present inventors conducted further extensive research based on the above discoveries, resulting in the discovery that by positioning a plate-shaped member the outermost surface of which is comprised of a metal material (also referred to as a "metal plate" hereinafter) between the heat source radiating the radiant heat and the forming material, it was possible to obtain a formed article permitting the manufacture of a high-quality eyeglass lens (an eyeglass lens-casting mold) in which astigmatism was inhibited or reduced. The present inventors attributed this to the following.

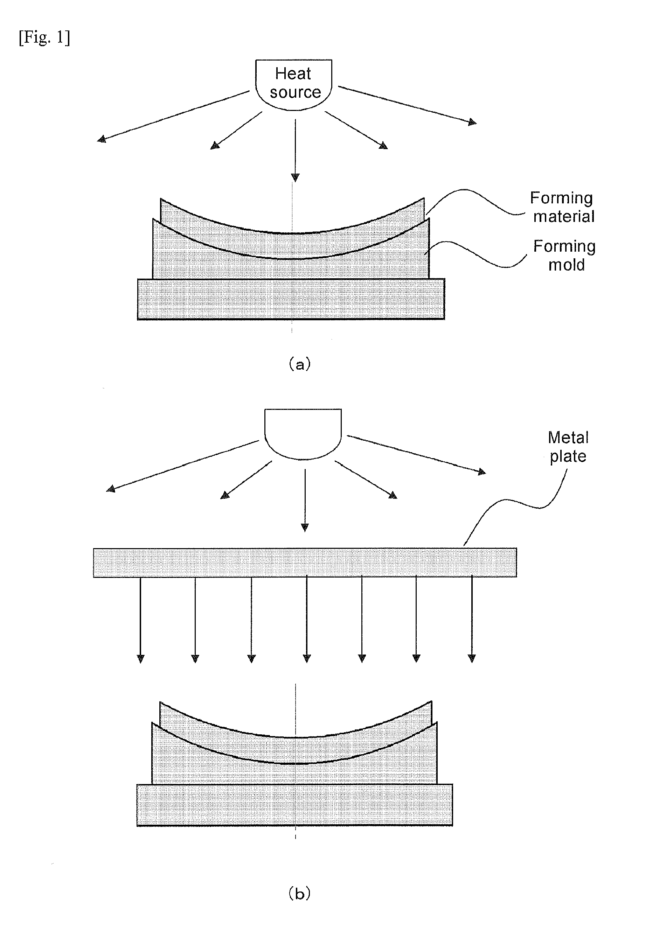

Fig. 1(a) shows a descriptive drawing of how a forming material is heated without providing a metal plate. Fig. 1(b) shows a descriptive drawing of how heating is conducted with a metal plate positioned between the heat source and the forming material.
When heating is conducted with nothing positioned between the heat source and the forming material, the forming material directly receives radiant heat from the heat source. However, as shown in Fig. 1(a), the radiant heat that is radiated by a heat source such as a halogen lamp expands radially, tending not to provide uniform heat to various portions of the upper surface of the forming material.
By contrast, as shown in Fig. 1(b), the metal plate that is positioned between the heat source and the forming material temporarily retains and accumulates radiant heat from the heat source, and then functions as a heat source by re-radiating heat onto the forming material. The metal material is of high thermal conductivity, so the entire outermost surface of the metal plate attains a uniform temperature in a short period, resulting in uniform radiant heat being radiated onto the forming material from the various portions of the outermost surface of the metal plate. Thus, the metal plate that is positioned between the heat source and the forming material can be thought of as functioning as a heat source that supplies uniform heat to the various portions of the upper surface of the forming material. The present inventors presumed that this was related to the uniform heating of the forming material, thus making it possible to obtain a formed article (eyeglass lens casting mold) permitting the manufacturing of a high-quality eyeglass lens in which astigmatism was inhibited or reduced.
The first aspect of the present invention was devised based on the above discoveries.

The method of manufacturing a formed article according to the first aspect of the present invention is a method of manufacturing a formed article forming an upper surface of a forming material comprised of a thermosoftening substance into a desired shape by heating the forming material in a state where the forming material is positioned on a forming surface of a forming mold to a temperature permitting deformation of the forming material to bring a lower surface of the forming material into tight contact with the forming surface, wherein the heating is conducted by positioning the forming mold, on which the forming material has been positioned, beneath heat source(s) radiating radiant heat in a state where a plate-shaped member the outermost surface of which is comprised of a metal material is positioned above the upper surface of the forming material.

In the above manufacturing method, the heating may be conducted by introducing the forming mold, on which the forming material has been positioned, into a heating furnace and causing the forming mold to sequentially pass beneath a multiple number of the heat sources positioned in the upper part within the furnace.

In the above manufacturing method, the plate-shaped member may be displaced together with the forming mold within the furnace so that the plate-shaped member is constantly positioned above the upper surface of the forming material.

In the above manufacturing method, as the plate-shaped member, a plate-shaped member, which has a size covering over the forming material when the plate-shaped member is positioned in the above state and is observed from vertically above, may be employed.

The upper surface of the forming material prior to the forming may have a rotationally symmetric shape with a geometric center as an axis of symmetry,

In the above manufacturing method, an exposed portion of the forming surface of the forming mold on which the forming material has been positioned may be covered with a covering member, and the above plate-shaped member may be positioned above the covering member.

In the plate-shaped member, the surface facing to the upper surface of the forming material is a flat surface or roughly similar in shape to the upper surface of the forming material prior to the forming.

The forming device according to the first aspect of the present invention is a forming device which is employed in a forming method forming an upper surface of a forming material comprised of a thermosoftening substance into a desired shape by heating the forming material in a state where the forming material is positioned on a forming surface of a forming mold to a temperature permitting deformation of the forming material to bring a lower surface of the forming material into tight contact with the forming surface, and comprises: heat source(s) capable of radiating radiant heat; and a plate-shaped member the outermost surface of which is comprised of a metal material, which is positioned above the upper surface of the forming material and beneath the heat source.

The above forming device may comprise a heating furnace comprising a multiple number of the heat sources positioned in the upper part thereof, and the heating furnace may further comprise a conveying means which conveys the forming mold sequentially beneath a multiple number of the heat sources.

The heating furnace may comprise a displacing means which displaces the plate-shaped member together with the forming mold so that the plate-shaped member is constantly positioned above the upper surface of the forming material.

The above forming device may comprise, as the plate-shaped member, a plate-shaped member which has a size covering over the forming material when the plate-shaped member is positioned in the above state and is observed from vertically above.

The above forming device may comprise a rotating means which rotates the plate-shaped member horizontally in the heating.

The above forming device may be employed in a forming method in which, as the forming material, the upper surface of the forming material prior to the forming has a rotationally symmetric shape with a geometric center as an axis of symmetry.

The above forming device may comprise a covering member which covers an exposed portion of the forming surface of the forming mold on which the forming material has been positioned, and the plate-shaped member may be positioned above the covering member.

In the plate-shaped member, the surface facing to the upper surface of the forming material may be a flat surface or roughly similar in shape to the upper surface of the forming material prior to the forming.

The present inventors conducted further extensive research based on the above-described knowledge relating to the method described in W02007/063735. This research resulted in the discovery that providing a metal material layer on at least a portion of the covering member yielded a formed article (eyeglass lens-casting mold) that permitted the manufacturing of a high-quality eyeglass lens in which astigmatism was inhibited or reduced. The present inventors surmised that the facts that the metal material layer was of high thermal conductivity, achieved a uniform temperature throughout within a short period, and thus functioned as a heat source that was capable of uniform heating, were linked to uniform heating of the forming material.
The second aspect of the present invention was devised based on the above discoveries.

The method of manufacturing a formed article according to the second aspect of the present invention is a method of manufacturing a formed article forming an upper surface of a forming material comprised of a thermosoftening substance into a desired shape by heating the forming material within a heating furnace in a state where the forming material is positioned on a forming surface of a forming mold to a temperature permitting deformation of the forming material to bring a lower surface of the forming material into tight contact with the forming surface, wherein the forming is conducted while an exposed portion on the forming surface side of the forming mold on which the forming material has been positioned is covered with a covering member, and at least a portion of the covering member comprises a metal material layer.

The metal material layer may be positioned on an outermost surface of the covering member.

In the above manufacturing method, the upper surface of the forming material prior to the forming may have a rotationally symmetric shape with a geometric center as an axis of symmetry, the metal material layer may have a rotationally symmetric shape with a geometric center as an axis of symmetry, and may be included in the upper surface of the covering member, the forming material may be positioned so that the geometric center of the metal material layer and the geometric center of the upper surface of the forming material lie along the same axis.

The outermost surface of the covering member may be comprised of the metal material layer.

The covering member may comprise the metal material layer on at least a portion of the outside surface of the base material comprised of a ceramic material.

The above manufacturing method may comprise a period during which the heating is conducted in a state where the metal material layer is positioned between the heat source(s) and the forming material.

The covering member may comprise multiple layers of different refractive indexes for a far-infrared ray, and at least one layer among the multiple layers may be the metal material layer.

The forming device according to the second aspect of the present invention is a forming device which is employed in a forming method forming an upper surface of a forming material comprised of a softening substance into a desired shape by heating the forming material within a heating furnace in a state where the forming material is positioned on a forming surface of a forming mold to a temperature permitting deformation of the forming material to bring a lower surface of the forming material into tight contact with the forming surface, wherein the forming is conducted while an exposed portion on the forming surface side of the forming mold on which the forming material has been positioned is covered with a covering member, and at least a portion of the covering member comprises a metal material layer.

The metal material layer may be positioned on an outermost surface of the covering member.

In the forming method in which the above forming device is employed, the upper surface of the forming material prior to the forming may have a rotationally symmetric shape with a geometric center as an axis of symmetry, the metal material layer may have a rotationally symmetric shape with a geometric center as an axis of symmetry, and may be included in the upper surface of the covering member, the forming material may be positioned so that the geometric center of the metal material layer and the geometric center of the upper surface of the forming material lie along the same axis.

In the above forming device, the outermost surface of the covering member may be comprised of the metal material layer.

In the above forming device, the covering member may comprise the metal material layer on at least a portion of the outside surface of the base material comprised of a ceramic material.

The above forming device may comprise a region in which the heating is conducted in a state where the metal material layer is positioned between the heat source(s) and the forming material.

In the above forming device, the covering member may comprise multiple layers of different refractive indexes for a far-infrared ray, and at least one layer among the multiple layers may be the metal material layer.

By the manufacturing method according to the first aspect and by the manufacturing method according to the second aspect, an eyeglass lens-casting mold may be manufactured as the formed article.

With the forming device according to the first aspect and with the forming device according to the second aspect, an eyeglass lens-casting mold may be manufactured as the formed article.

A further aspect of the present invention relates to a method of manufacturing an eyeglass lens comprising: manufacturing a formed article by the above manufacturing method, or with the above forming device; and manufacturing an eyeglass lens by cast polymerization with the formed article manufactured or a portion of the formed article manufactured as a casting mold.

The present invention can permit the uniform heating of a forming material within a heating furnace, and thus yield an eyeglass lens-casting mold that permits the manufacturing of a high-quality eyeglass lens in which astigmatism is inhibited or reduced. Thus, the present invention can provide a high-quality eyeglass lens in which astigmatism is inhibited or reduced.

### BRIEF DESCRIPTION OF THE DRAWINGS

[Fig. 1] Fig. 1(a) is a descriptive drawing of the embodiment in which the forming material is heated without providing a metal plate. Fig. 1(b) is a descriptive drawing of the embodiment in which heating is conducted with a metal plate positioned between the heat source and the forming material.
[Fig. 2] Typical drawings of the metal plate positioned above the upper surface of the forming material, observed from vertically above, in the first aspect.
[Fig. 3] It shows an example of the method of supporting the metal plate in the first aspect.
[Fig. 4] It shows an example of the method of supporting the metal plate in the first aspect.
[Fig. 5] Fig. 5(a) shows an example of the covering member positioned beneath the heat source without providing a metal plate. Fig. 5(b) shows an example of a metal member positioned between the heat source and the covering member.
[Fig. 6] A descriptive drawing of the forming mold, glass material, covering member, and metal plate positioned in Example according to the first aspect.
[Fig. 7] It shows an example of the layer structure of a covering member that can be employed in the first aspect.
[Fig. 8] Typical drawings of forming molds with forming materials positioned on the forming surface thereof and covering members positioned on exposed portions on the forming surface side.
[Fig. 9] It shows an example of a covering member that can be employed in the second aspect.
[Fig. 10] It shows examples of covering members that can be employed in the second aspect.
[Fig. 11] It shows an example of a covering member that can be employed in the second aspect.

### MODE FOR CARRYING OUT THE INVENTION

The first and second aspects of the present invention, and items common to both aspects, are described in greater detail below. Unless specifically stated otherwise, the items that are described below are common to both aspects. The two aspects can also be optionally combined.

The first aspect of the present invention relates to a method of manufacturing a formed article forming an upper surface of a forming material comprised of a thermosoftening substance into a desired shape by heating the forming material in a state where the forming material is positioned on a forming surface of a forming mold to a temperature permitting deformation of the forming material to bring a lower surface of the forming material into tight contact with the forming surface. In the method of manufacturing a formed article according to the first aspect, the heating is conducted by positioning the forming mold, on which the forming material has been positioned, beneath heat source(s) radiating radiant heat in a state where a plate-shaped member (metal plate) the outermost surface of which is comprised of a metal material is positioned above the upper surface of the forming material. By the method of manufacturing a formed article according to the first aspect, the positioning of the metal plate between the heat source radiating radiant heat and the forming material can allow the metal plate to function as a heat source supplying uniform heat to various portions of the upper surface of the forming material, as set forth above. This permits uniform heating of the forming material. For example, in the course of manufacturing an eyeglass lens-casting mold as a formed article, an eyeglass lens-casting mold that is capable of molding high-quality eyeglass lenses, in which the generation of astigmatism that is unnecessary for eyeglass correction is reduced or inhibited, can be obtained.
The method of manufacturing a formed article of the first aspect will be described in greater detail below.

### Metal plate

Metals such as copper, iron, stainless steel (SUS430, 301, 304, 316, 310, and the like), chromium, cobalt, tungsten, nickel, gold, platinum, manganese, molybdenum, titanium, tantalum, and aluminum, alloys of two or more of the same, or of a metal and nonmetal (such as brass and duralumin) are examples of the metal material that constitutes the outermost surface of the plate-shaped member. Of these, highly thermoconductive metal materials that can be rapidly heated to a uniform temperature are desirable. A highly thermoconductive metal material with a thermal conductivity at 25°C of equal to or higher than 200 W/mk is desirable, equal to or higher than 230 W/mk is preferred, and equal to or higher than 300 W/mk is of greater preference. The higher the thermal conductivity of the metal material, the more quickly it can be heated to a uniform temperature and thus the more desirable it is. Considering the thermal conductivity of the metal materials that are available, the upper limit of thermal conductivity at 25°C is about equal to or lower than 400 W/mk. Examples of metal materials that are desirable as materials of suitable thermal conductivity are copper (which has a thermal conductivity at 25°C of 398 W/mk), gold (with a thermal conductivity at the same temperature of 320 W/mk), and aluminum (with a thermal conductivity at the same temperature of 236 W/mk). Metal materials comprising graphite with a metal are suitable as metal plate materials because the thermal conductivity thereof can be increased by adding graphite. A thermal conductivity of about 1.5-fold that of copper alone and about two-fold that of aluminum alone can be achieved through the addition of graphite. Since graphite is lighter than metals, the incorporation of graphite into a metal can reduce the weight of the metal plate by about half, for example, in the case of copper plate. This is desirable from the perspective of ease of handling.

The metal plate is positioned above the upper surface of the forming material and beneath the heat source radiating radiant heat during heating of the forming material. As set forth above, the metal plate that is thus positioned between the heat source and forming material can function as a heat source by temporarily accumulating the heat from the heat source and re-radiating it. The metal plate can also comprise a material other than the metal material in a portion other than the outermost surface. For example, to increase strength, a reinforcing layer comprised of ceramic can be provided within the plate-shaped member. Examples of ceramics that can be employed as reinforcing layers in this manner are the various ceramic materials given further below by way of example of materials constituting the covering member. Such a metal plate can be fabricated by forming a metal material layer by a known film-forming method such as plating on the surface of a ceramic plate. A plate-shaped member the whole, including the outermost surface, of which is comprised of a metal material is desirable to rapidly achieve a uniform temperature throughout the entire plate-shaped member.

A metal plate about 1 mm to 5 mm in thickness, for example, is easy to handle, but the thickness is not specifically limited. A plate-shaped member that comprises the internal reinforcing layer as set forth above and is about 1 to 5 mm in thickness is easy to handle, but the thickness thereof is not specifically limited.
In the first aspect, any heat source that is capable of radiating radiant heat can be employed without limitation. The use of a metal plate makes it possible to render uniform the radiant heat that is radially radiated by a lamp-type heat source such as a halogen lamp and re-radiate it onto the forming material. Thus, application of the first aspect is particularly effective when a lamp-type heat source is employed.

The metal plate can be positioned anywhere between the heat source and the forming material. To uniformly re-radiate onto the upper surface of the forming material the radiant heat that is radiated by the heat source, a position that is separate from the heat source and the upper surface of the forming material is desirable. The upper surface of the forming material is a surface that is formed into a desired shape by thermo softening. Thus, positioning the metal plate away from the upper surface of the forming material is desirable to prevent contamination of the upper surface of the forming material. The distance between the forming material and the metal plate is, for example, suitably about 10 to 150 mm as the distance from the geometric center of the upper surface of the forming material. Additionally, the distance by which the heat source and the metal plate are separated is, for example, about 50 to 300 mm. However, it can be suitably determined based on the height of the interior of the heating furnace, and is not specifically limited.

The metal plate can be positioned to cover the heat source in a curved form, for example. As shown in Fig. 1(b), it is desirable for the lower surface of the metal plate to be flat to permit uniform radiation of the radiant heat onto the upper surface of the forming material. Further, in terms of uniformly radiating radiant heat from the metal plate onto the upper surface of the forming material and increasing the uniformity of the heat distribution of the forming material, the shape of the lower surface of the metal plate desirably approximates that of the upper surface of the forming material. From these perspectives, the lower surface of the metal plate is desirably either flat or roughly similar in shape to the upper surface of the forming material prior to forming. In this context, "roughly similar in shape" includes, for example, shapes with the difference of curvatures of about ± 15 percent or about ± 1 base curve. The upper surface of the metal plate desirably has a shape that is identical to its lower surface to facilitate processing.

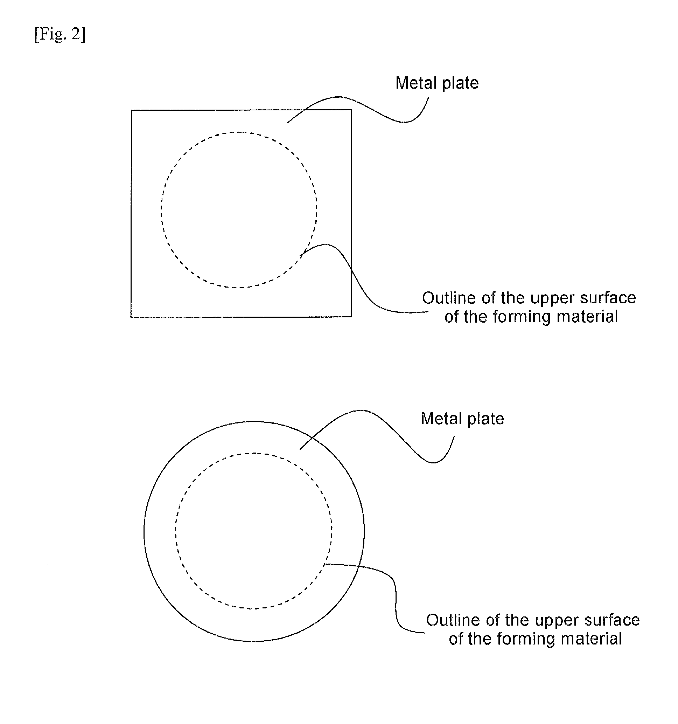

Fig. 2 is a typical drawing of the metal plate positioned above the upper surface of the forming material as viewed from vertically above that describes a metal plate of desirable size.
As shown in Fig. 2, the upper surface of the metal plate can be any of various shapes, such as being square (upper portion of Fig. 2), round (lower portion of Fig. 2), or even polygonal or elliptical. Since radiant heat advances linearly, the metal plate, regardless of shape, is desirably of a size covering over the forming material when the metal plate is positioned above the upper surface of the forming material and is observed from vertically above so that the radiant heat that is re-radiated by the metal plate can be received over the entire upper surface of the forming material. When a covering member is positioned on the forming mold as set forth further below and the metal plate is observed from vertically above in this state, this means a size that covers over the covering member, that is, a size that covers over the forming material. A size that covers over the covering member when observed in this state makes it possible for the radiant heat that has been re-radiated by the metal plate to be received over the entire upper surface of the covering member. This is desirable because the heat that is re-re-radiated onto the forming material within the covered space can be rendered uniform.

A batch-type heating furnace or continuous heating furnace can be employed in the method of manufacturing a formed article of the first aspect. From the perspective of productivity, a continuous heating furnace is desirably employed. In a continuous heating furnace, while the object being heated is being conveyed through the interior of the furnace, the temperature within the furnace is controlled so as to maintain a prescribed heat distribution in the conveyance direction, thereby making it possible to continuously conduct a series of processes within the furnace, such as a temperature-rising step, an elevated temperature-maintaining step, a temperature-lowering step and the like. To conduct such heating in individual zones, multiple heat sources radiating radiant heat are normally positioned above in the conveyance direction of the object being heated in a continuous heating furnace. In a continuous heating furnace, the forming material that is positioned on the forming molds is heated by causing the forming molds to sequentially pass beneath multiple heat sources while being displaced through the interior of the furnace. In a continuous heating furnace, it is possible to provide metal plates between the heat source and the upper surface of the forming material only when the forming mold passes directly beneath the heat source. However, to achieve uniform heating, it is desirable to constantly position metal plates above the upper surface of the forming material in a continuous heating furnace.

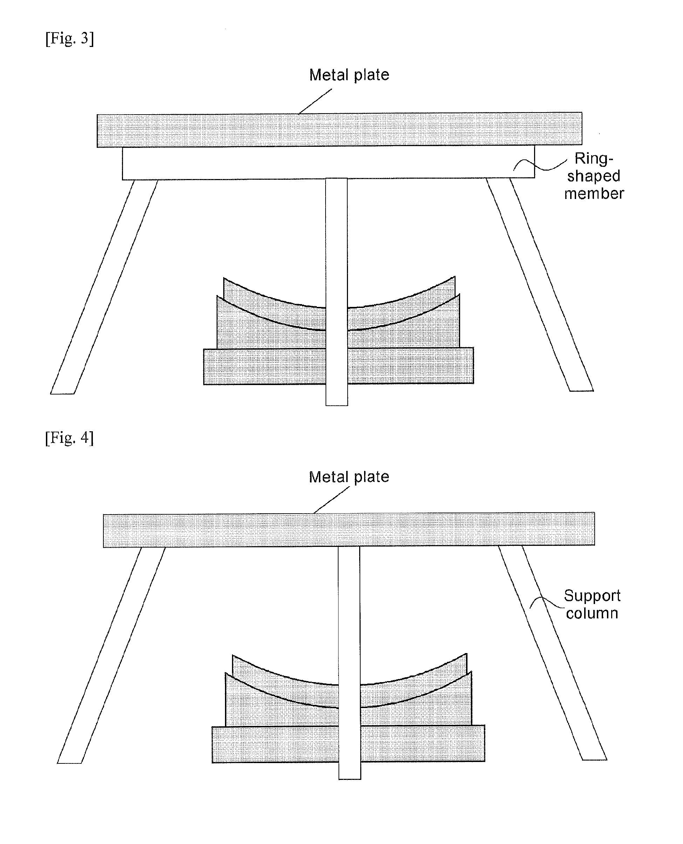

In a continuous heating furnace, as an example of a first method for constantly positioning metal plates above the upper surface of the forming material, a band-like metal plate is positioned within the furnace so as to cover the entire upper part of the conveyance route of the forming mold. As an example of a second method, a means of displacing the metal plate through the interior of the furnace is provided, and the forming mold and the metal plate are displaced so that the metal plate is constantly positioned over the upper surface of the forming material. In a continuous heating furnace, the temperature of each zone within the furnace is independently controlled and temperature controls are normally also conducted to maintain temperature distributions within each zone. Additionally, the metal plate is of high thermal conductivity, as set forth above, so even when positioned in an atmosphere in which a temperature distribution is maintained, it is normally often difficult to impart the same temperature distribution as in the atmospheric gas. Accordingly, the second method is desirably employed. In the second method, a separate means from the means of conveying the forming mold can be provided as the means of displacing the metal plate, but the same means as that used to convey the forming mold is desirably employed. For example, in a continuous heating furnace equipped with a belt conveyor as the conveying means, it is possible to displace both the forming mold and the metal plate through the interior of the furnace by employing a support base such as a tripod on the belt conveyor and positioning the metal plate on it. Here, a support base in which the metal plate supporting part is open (for example, one that supports the metal plate with a ring-shaped member) is desirably employed as the support base so that radiant heat from the lower surface of the metal plate is not blocked by the support base. Fig. 3 shows an example of a metal plate that is supported in such a state. It is also possible to provide three or more support columns around the perimeter of the metal plate to support it without employing a support base. Employing a metal plate with such a structure is desirable in that the radiant heat from the lower surface of the metal plate is not blocked by the support base. Fig. 4 shows an example of a metal plate supported in such a state.
Additionally, in a batch furnace, since forming molds are provided and thermoprocessing is conducted at fixed positions within the furnace, it is possible to conduct thermoprocessing while positioning the metal plates between the upper surface of the forming material and the heat source, for example, by employing tripod support bases above the forming molds and positioning the metal plates on them, or by providing metal plates equipped with support columns. The above continuous heating furnace and batch-type heating furnace will be described in greater detail further below.

To enhance productivity in the thermoforming of a forming material, multiple pieces of forming material are normally simultaneously introduced into in a batch furnace, and multiple pieces of forming material are normally sequentially conveyed into a continuous heating furnace. In the course of processing multiple pieces of forming material in this manner, it is desirable to provide one metal plate per piece of forming material to ensure uniform heating of the various pieces of forming material.

For example, in a heating furnace in which heat sources are provided in a portion of the furnace and in continuous heating furnaces in which each zone is regulated at a different temperature, the state of heating varies in the various parts of the furnace. It is possible for the metal material to radiate (re-radiate) uniform radiant heat onto the upper surface of the forming material because the metal material can quickly render the temperature uniform regardless of the external temperature distribution. However, in a continuous heating furnace in which the temperature is controlled in a manner increasing in the conveyance direction, for example, a temperature distribution, albeit slight and extremely brief, is sometimes produced on the metal plate because of exposure to higher temperatures while advancing. In such cases, to correct for the slight temperature distribution and render the radiant heat that is radiated onto the upper surface of the forming material more uniform, the metal plate is desirable rotated horizontally. Japanese Unexamined Patent Publication (KOKAI) Showa No. 63-306390, which is expressly incorporated herein by reference in its entirety, proposes a means of rendering the temperature distribution within a heating furnace more uniform by increasing the heating uniformity by rotating the object being heated within the furnace in the course of sintering, metallizing, or brazing a ceramic product in a continuous heating furnace. However, an unanticipated astigmatic aberration is sometimes produced when attempting to render the thermal distribution uniform by simple rotation in the course of forming a formed article of complex shape such as an eyeglass lens-casting mold by the hot sag forming method. By contrast, the uniformity of heating can be enhanced without rotating the forming material by the method of rotating the metal plate. Accordingly, the method of manufacturing a formed article according to the first aspect, which employs a metal plate that can be rotated separately and independently of the forming material, is particularly suitable as a method of manufacturing by the hot sag forming method a formed article of complex shape such as an eyeglass lens-casting mold. Further, rotating the metal plate is also effective to enhance heating uniformity when the shape of the upper surface of the forming material does not conform well to the shape of the lower surface of the metal plate.
The rotation of the metal plate can be continuously conducted during heating, or can be intermittently conducted in just regions where the heat distribution tends to be particularly nonuniform. The metal plate can be rotated in just one direction, or can be rotated by a suitable combination with reverse rotation. For example, it is possible to repeat a cycle consisting of approximately one complete rotation in one direction (a positive direction) followed by approximately one complete rotation in the opposite direction. For example, on the floor surface of a heating furnace, a ring-shaped rotating base can be provided in a manner covering a position where a forming mold has been installed, support columns supporting the metal plate or a tripod on which the metal plate has been positioned can be positioned on the rotating base, and the rotating base can be rotated in this state to rotate the metal plate independently of the forming material and forming mold.

### Forming material

The forming material the upper surface of which is formed into a desired shape by thermosoftening in the manufacturing method of the first aspect will be described next.

The forming material is comprised of a thermosoftening substance. Various thermosoftening substances such as glasses and plastics can be employed as the thermosoftening substance. Examples of glasses are Crown-based, flint-based, barium-based, phosphate-based, fluorine-containing, and fluorophosphate-based glasses. Glass having the composition and physical properties described in paragraphs [0028] to [0031] of WO2007/063735 is an example of a glass that is suitable as the forming material.

The above forming material can be obtained by processing the thermosoftening substance into a desired shape. The forming material can be processed by known methods. The shape of the forming material can be a plate shape, spherical, elliptical, a rotationally symmetric shape (a toric lens or aspherical rotationally symmetric dioptric power lens), a free-curve shape (a progressive dioptric power lens or aspherical dual-surface dioptric power lens), or the like. In particular, in an embodiment for forming a forming material the upper surface of which has a rotationally symmetric shape with the geometric center as the axis of symmetry, lack of balance in the heat distribution during heating results in a pronounced tendency for astigmatism due to a considerable mismatch in the timing of tight contact between the lower surface of the forming material and the forming surface of the forming mold. By contrast, the first aspect makes it possible to increase the uniformity of heating of the forming material and achieve balance in the heat distribution by employing the above-described metal plate. Accordingly, the first aspect is desirably applied to embodiments that form forming materials having a rotationally symmetrical shape in which the axis of symmetry of the upper surface is the geometric center.

### Forming method

The method of forming the above forming material will be described next.
The forming mold with the forming material positioned on the forming surface thereof is heated to a temperature permitting deformation on the forming mold. A known forming mold that is employed in the hot sag forming method can be employed as the forming mold on which the forming material has been positioned. Examples of the forming mold employed in the first aspect are the forming molds described in paragraphs [0024] to [0027] and [0035] to [0053] in WO2007/063735. The forming mold having through-holes that is described in WO2007/063735 can be employed and aspiration can be conducted through the through-holes during forming.

In the first aspect, thermoprocessing can be conducted with the exposed portion on the forming surface side of the forming mold on which the forming material has been positioned covered by the covering member. The use of a covering member is desirable to prevent foreign matter from contaminating the upper surface of the forming material without providing a large-scale clean room containing the heating furnace. In the present invention, the term "covering" means that the internal space is separated from the exterior portion to the extent that foreign matter such as dust and dirt to not enter, but the entry and exit of gases are permitted.

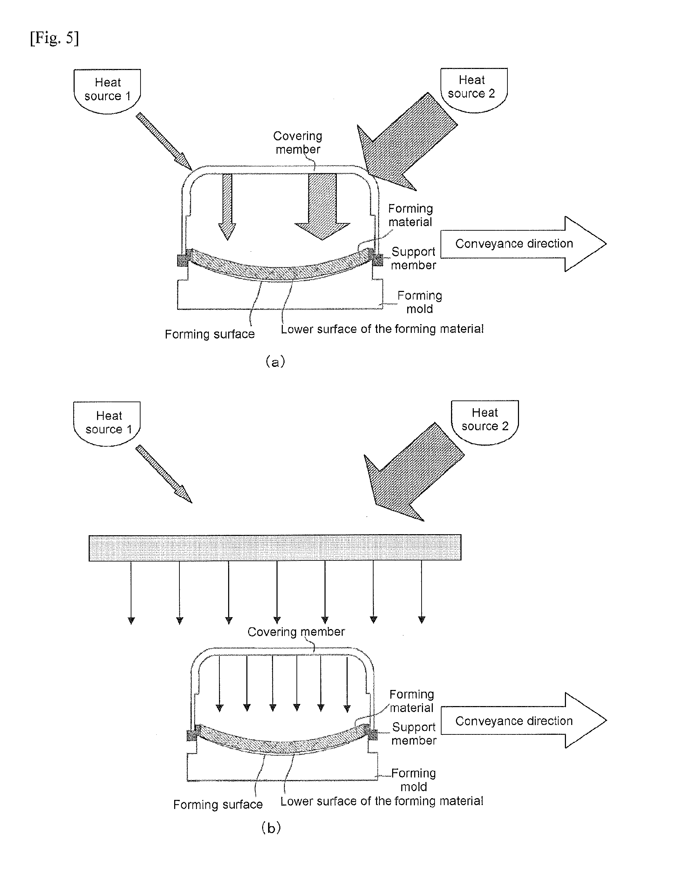

A covering member comprised of a ceramic material with a good heat resistance is desirably employed. For example, ceramics with main components such as SiO₂, Al₂O₃, and MgO in the form of alumina (Al₂O₃), AlTiC (Al₂O₃ -TiC), zirconia (ZrO₂), silicon nitride (Si₃N₄), aluminum nitride (AlN), and silicon carbide (SiC) are suitable. Preferred examples are ceramics comprised of equal to or higher than 99 mass percent of SiO₂, Al₂O₃, and MgO, as well as K₂O or the like. In this context, the term "main component" means that the component constitutes a greater portion of the ceramic material than any other constituent component thereof, accounting for equal to or more than 50 mass percent, for example. Covering members comprised of ceramic materials can be formed by powder metallurgy. Reference can be made to paragraph [0021] of W02007/063735 for details. The upper surface on the inside of the covering member comprised of ceramic material can be processed to prevent particle scattering. Reference can be made to paragraphs [0022] and [0023] of W02007/063735 for details. The covering member that can be employed in the first aspect can have any shape that is capable of covering exposed portions on the forming surface side of the forming mold on which the forming material is positioned. The lid-shaped member (lid member) shown in Fig. 5 further below is an example of such a covering member.

As set forth above, it is difficult for the covering member comprised of a ceramic material to uniformly heat the forming material as is. However, when employed with the metal plate positioned above it, it permits uniform heating of the forming material. The reasons are as set forth below.
Fig. 5(a) shows an example of a covering member positioned beneath a heat source without the positioning of a metal plate. Fig. 5(b) shows an example in which a metal plate is positioned between the heat source and the covering member. In the embodiments shown in Fig. 5, heat source 2 radiates radiant heat of greater energy than heat source 1 so that the temperature increases in the conveyance direction of the forming mold.
For example, in a heating furnace in which heat sources are positioned in a portion of the interior of the furnace, and in a continuous heating furnace in which the individual zones are controlled to achieve different temperatures, the state of heating differs in various parts of the interior of the furnace. For example, in a continuous heating furnace in which the temperature is controlled so as to increase in the conveyance direction, as shown in Fig. 5, heat sources radiating radiant heat of ever greater energy are disposed in the direction of advance. Since the thermal conductivity of a covering member comprised of a ceramic material is low, it takes time for the heat in front to be transmitted throughout the covering member. That is, in the covering member comprised of a ceramic material, it is difficult for the differing levels of energy generated by the various heat sources to be received and rapidly produce a uniform temperature state throughout. Accordingly, as indicated typically by the size of the arrows in Fig. 5(a), the further the covering member advances, the greater the energy of the radiant heat that is released on the surface of the forming material. As a result, a state is created where various portions of the covering members function as multiple heat sources releasing radiant heat of differing temperature, rendering the heating state of the forming material nonuniform.
By contrast, when a metal plate is positioned above a covering member comprised of a ceramic material, the metal plate temporarily accumulates the radiant heat from the heat source. Since the temperature of the metal plate rapidly reaches uniformity, as shown typically in Fig. 5(b), uniform radiant heat can be radiated (re-radiated) onto the covering member. When the heat that is being applied to the covering member is rendered uniform in this manner, since the radiant heat that is radiated (re-re-radiated) from the various portions of the covering member is rendered uniform, it becomes possible to uniformly heat the forming material positioned within the covered space. To achieve even more uniform heating, the upper inside surface of the covering member is desirably either flat or roughly identical in shape to the upper surface of the forming material. Still further, the lower surface of the metal plate is desirably either flat or roughly identical in shape to the upper outer surface of the covering member.

In the embodiments shown in Fig. 5, a ring-shaped support member is positioned between the covering member and the forming mold, with the edge surface in a step portion along the perimeter of the support member fitting against the edge surface of the opening in the cover member. When such a support member is not employed in this manner, it suffices to provide a step portion for supporting the covering member in the perimeter portion of the forming mold and fit the edge surface of the step portion into the opening of the covering member.

The covering member shown in Fig. 5 is a part of a cylindrical shape, with an opening formed in just the bottom surface of the cylindrical shape, creating a space in the interior. The dimensions of the covering member are not specifically limited. From the perspectives of impact resistance and efficient thermal conduction, a thickness of about 1 micrometer to 5 mm, and an internal height of about 5 to 100 mm, particularly 30 to 60 mm, are suitable. Reference can be made to paragraphs [0013] to [0023] in WO2007/063735 with regard to covering members that can be employed in the first aspect. As set forth further below, when a multilayer structure is employed in the covering member and the function of a far infrared ray-blocking filter is imparted to it, it is desirable to determine the various film thicknesses by taking into account the refractive indexes of the various layers in the far infrared ray.

The radiant heat that is radiated into the covered space by the covering member is gradually re-radiated (emitted) towards the exterior as far infrared radiation energy. Since ceramic materials generally have poor transmittance to far infrared ray, a covering member that is comprised of a ceramic material can function as a far infrared ray-blocking layer (far infrared ray-blocking filter). Thus, far infrared radiation energy can be prevented from being re-radiated to the exterior and compromising the heat retention property. Accordingly, constituting the covering member of a ceramic material is desirable from the perspective of enhancing the heat retention property.

To enhance the insulating heat retention, it is desirable for the covering member to have a multilayer structure with two or more layers. This will be described below.

To selectively block light over a specific wavelength range, it is possible to employ a laminate structure in which a high refractive index layer and a low refractive index layer are alternately laminated. Denoting the wavelength of the light being selectively blocked as λ₀, the refractive index for the light of the high refractive index layer as n_{H}, and the refractive index of the low refractive index layer as n_{L}, when the thickness of the high refractive index layer is given by d_{H} = λ₀/4n_{H}, and the thickness of the low refractive index layer is given by d_{L} = λ₀/4n_{L}, light reflected at the boundary between the two layers cancels out and the transmittance decreases. Accordingly, constituting the covering member of a combination of high refractive index layers and low refractive index layers and determining the thickness of each layer based on the above equations based on the refractive index of each layer for the far infrared ray makes it possible to impart the function of a far infrared ray-blocking filter to the covering member. The wavelength range of far infrared ray is 3 to 1,000 micrometers, so the optical film thickness of the high refractive index layer and the low refractive index layer (refractive index multiplied by the physical film thickness) each desirably fall within a range of 0.75 to 250 micrometers. In that case, the outermost layer that is in contact with the covered space can be either the high refractive index layer or the low refractive index layer.

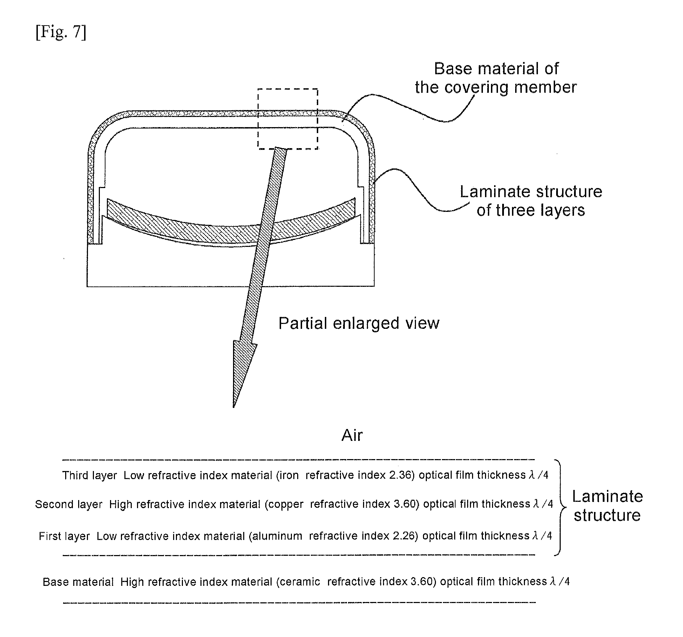

The function of the above-described far infrared ray-blocking filter normally improves with the number of high refractive index layers and low refractive index layers that are combined. Accordingly, when the covering member is comprised of two or more layers, it is desirable to provide two or more sets of a high refractive index layer and a low refractive index layer such that the high refractive index material with a higher refractive index for the far infrared ray and a low refractive index material with a lower refractive index for the far infrared ray are laminated in alternating fashion. When the covering member is comprised of multiple layers in this fashion in the first aspect, it is desirable for the covering member to be comprised of multiple layers of differing refractive index for the far infrared ray. In that case, the optical film thickness of each layer desirably falls within a range of 0.75 to 250 micrometers, as set forth above. Fig. 7 shows an example of the layer configuration of such a covering member. In the covering member shown in Fig. 7, from the covered space side, there are two sets of a high refractive index layer and a low refractive index layer. In Fig. 7, λ denotes the wavelength of the far infrared radiation region (about 3 to 1,000 micrometers), and the refractive indexes of the various materials are refractive indexes for the above λ. Fig. 7 shows an embodiment in which all of the layers in the laminate structure except for the base material are metal material layers. However, the present invention is not limited to the embodiment shown in Fig. 7; a covering member in which at least one of the layers in the laminate structure is comprised of a material other than a metal material, such as a ceramic, can also be employed. The difference in the refractive index for the far infrared ray between adjacent layers can be, for example, equal to or more than 1.00 and equal to or less than 2.00, but is not specifically limited. A suitable material can be selected from among known materials such as ceramic materials and metal materials for use as the material constituting the above covering member of multilayer structure by considering its refractive index for the far infrared ray. Metal materials make it possible to adjust the refractive index for the far infrared ray by means of alloy compositions. Similar, ceramic materials permit the adjustment of the refractive index for the far infrared ray based on their composition. The covering member of multilayer structure can be fabricated, for example, by laminating a layer of a metal material by a known film forming method such as plating on a base material.

When providing the heat source of the heating furnace beneath the forming mold, it is also desirable to provide a metal material layer by a known film-forming method such as plating on the outermost lower surface of the forming mold. The metal materials given by way of example for metal materials constituting the metal plate are also desirably employed to constitute the metal material layer. The thickness of this layer is suitably about 1 mm to 30 mm from the perspectives of film-forming properties and ease of handling of the film that is formed. Since metals have poor durability and high coefficients of thermal expansion at what is generally the maximum temperature of 800°C in softening processing, they undergo great deformation in shape due to thermal expansion in the vicinity of 800°C. Accordingly, the forming surface of the forming mold is desirably formed of a ceramic material of high durability and a relatively low coefficient of thermal expansion at elevated temperatures. Additionally, ceramic materials present the problem of nonuniform heating, as set forth above. To compensate for this, the base material of the forming mold is desirably comprised of a ceramic material, and a metal material layer is desirably formed on the outermost lower layer of the forming mold. It is thus possible to ensure uniformity when heating from beneath and obtain a formed article of higher quality.

The above temperature at which deformation is permitted is desirably a temperature that is greater than or equal to the glass transition temperature (Tg) when the forming material is comprised of glass. Heating can be conducted by a known method, such as by positioning the forming mold within an electric furnace. It is possible to heat the forming material to a desired temperature by controlling the temperature of the atmosphere within the electric furnace so that the forming material attains the temperature that has been set.

Specific embodiments of the method of manufacturing a formed article according to the first aspect will be described next. However, the first aspect is not limited to the embodiments set forth below.
First, a forming mold is positioned with its forming surface facing upward, desirably in a clean room. When the above covering member is employed, the covering member is positioned so that the exposed portion of the forming mold is covered. When a support member is employed to position the covering member, the support member is fit onto the perimeter portion of the forming surface and the step portion on the lateral surface. The forming material is then carried at prescribed positions on the forming surface along the support member. The edge surface of the lateral portion of the forming material is supported in fixed fashion by the support member in a horizontal direction. In contrast, the edge surface of the perimeter portion of the lower surface of the forming material is held in fixed fashion in contact with the forming surface of the forming mold. The center portion on the contact surface side of the forming material with the forming mold is somewhat separated from the forming surface of the mold. The distance of this separation varies with the shape of the lower surface of the forming material and the shape of the forming surface of the mold, and is normally about 0.1 to 2.0 mm.

Next, a metal plate is positioned over the upper surface of the forming material. The metal plate can be installed on a carrying base such as a tripod as shown in Fig. 3, or a metal plate with support columns provided on the perimeter portion thereof can be positioned as shown in Fig. 4. Subsequently, the assembly is conveyed from the clean room into an electric furnace by a belt conveyor, and displaced within the electric furnace to conduct thermoprocessing while maintaining the positional relation between the forming mold, forming material, covering member, and metal plate. To reliably prevent contamination by foreign matter, it is desirable to position the forming material on the forming mold and the like within a clean room in this manner. When conducting aspiration during forming using a forming mold with a through-hole, it is desirable to employ a carrying base having an aspirating function.

In the electric furnace, thermosoftening processing is conducted while controlling the temperature based on a preset temperature program. The electric furnace employed can be a batch-type electric furnace or a continuous feed-type electric furnace. A batch-type electric furnace is a device in which items being processed are positioned within a relatively small closed space and the temperature within the furnace is varied according to a predetermined temperature program. In contrast, a continuous feed-type electric furnace is a device having an entrance and an exit. Items being processed are caused to pass through the interior of the electric furnace, which has a set temperature distribution, within a prescribed period by means of a conveyance device such as a conveyor and thermoprocessed. In a continuous heating furnace, the temperature distribution within the furnace can be controlled by means of multiple heaters (heat sources) and control mechanisms that circulate air within the furnace by taking into account heat that is emitted and radiated. In the first aspect, a heating furnace in which heaters are installed above the conveyance route within the furnace is employed. However, the heat sources can be positioned beneath the conveyance route through the furnace or on the sidewalls.

In a continuous heating furnace, the temperature is desirably controlled so as to comprise a temperature rising region, constant temperature maintenance region, and cooling region from the entrance (forming mold introduction entrance) side. The forming material that passes through a furnace in which the temperature is controlled in this manner is heated to a temperature permitting deformation in the temperature rising region, forming of the upper surface is progressed in the constant temperature maintenance region, cooling is then conducted in the cooling region, and the article is discharged to the exterior of the furnace. The length of the various regions, the conveyance rate in each region, and the like can be suitably set based on the total length of the conveyance route of the furnace and on a heating program. Temperature control in a continuous heating furnace and thermoforming of the forming material in a continuous heating furnace can be conducted according to the methods described in paragraphs [0062] to [0074] in WO2007/063735, for example.

Once softening processing has been completed in the heating furnace, the lower surface of the forming material and the forming surface of the forming mold fit together closely. Additionally, the upper surface of the forming material deforms based on the deformed shape of the lower surface of the forming material, and is formed into roughly the transferred shape of the forming surface of the forming mold. In this manner, the hot sag forming method makes it possible to transfer the shape of the mold to the upper surface of the forming material, forming the upper surface of the forming material to a desired shape.

After forming the upper surface by the above steps, the forming material is removed from the forming mold to obtain a formed article. The formed article thus obtained can be employed as an eyeglass lens-casting mold. Alternatively, after a portion such as the perimeter is removed, it can be employed as an eyeglass lens-casting mold. The eyeglass lens-casting mold that is obtained can be employed as the upper or lower mold of a mold to manufacture plastic lenses by the cast polymerization method. More specifically, a mold can be assembled by combining an upper mold and a lower mold with a gasket or the like so that the upper surface of a forming material formed by the hot sag forming method is positioned within the mold, a plastic lens starting material liquid can be cast into the cavity of the mold, and a polymerization reaction can be conducted to obtain a lens of desired surface shape. Cast polymerization in which the above eyeglass lens-casting mold is employed can be conducted by a known method.

The first aspect also relates to a forming device which is employed in a forming method forming an upper surface of a forming material comprised of a thermosoftening substance into a desired shape by heating the forming material in a state where the forming material is positioned on a forming surface of a forming mold to a temperature permitting deformation of the forming material to bring a lower surface of the forming material into tight contact with the forming surface. The forming device according to the first aspect comprises heat source(s) capable of radiating radiant heat and the metal plate positioned above the upper surface of the forming material and beneath the heat source.
The details of the forming device according to the first aspect are as set forth above. The forming device according to the first aspect permits uniform heating of the forming material, thereby making it possible to manufacture an eyeglass lens-casting mold capable of producing high-quality formed articles such as high-quality eyeglass lenses in which astigmatism is inhibited or reduced.

The second aspect of the present invention will be described next.

The second aspect relates to a method of manufacturing a formed article forming an upper surface of a forming material comprised of a thermosoftening substance into a desired shape by heating the forming material within a heating furnace in a state where the forming material is positioned on a forming surface of a forming mold to a temperature permitting deformation of the forming material to bring a lower surface of the forming material into tight contact with the forming surface. In the method of manufacturing a formed article according to the second aspect, the forming is conducted while an exposed portion on the forming surface side of the forming mold on which the forming material has been positioned is covered with a covering member, and, as the covering member, a covering member at least a portion of which comprises a metal material layer is employed. The term "covered" in the present invention is defined as set forth above.

The covering member is capable of temporarily retaining and accumulating radiant heat or the like from the heat source of the heating furnace and re-radiating accumulated heat, causing the various portions of the covering member to function as heat sources. When at least a portion of the covering member contains a metal material layer, as set forth above, the metal material layer can serve as a heat source that is capable of uniform heating. Thus, heating of the forming material can be rendered uniform in the heating furnace. For example, in the course of manufacturing a formed article in the form of an eyeglass lens-casting mold, it is possible to obtain an eyeglass lens-casting mold that is capable of molding high-quality eyeglass lenses in which astigmatism that is unnecessary in eyeglass correction is reduced or inhibited. The covering member can also perform the role of preventing foreign matter in the heating furnace from contaminating the upper surface of the forming material.
The method of manufacturing a formed article according to the second aspect will be described in greater detail.

### Covering member

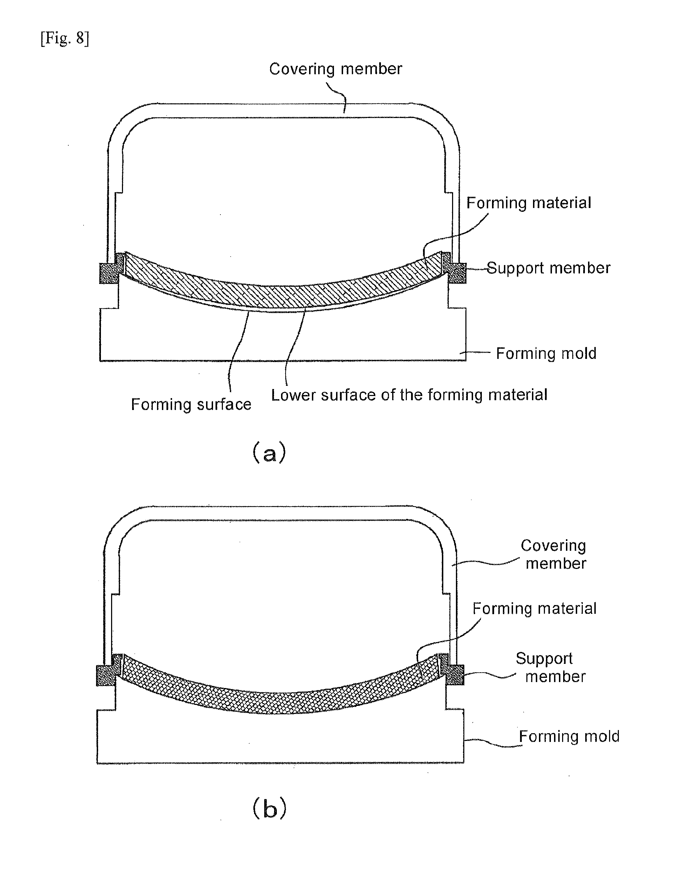

In the same manner as in the covering member in the first aspect, the covering member in the second aspect need only have a shape that is capable of covering the exposed portion on the forming surface side of the forming mold in which a forming material has been positioned. An example of such a covering member will be described based on Fig. 8. However, the present invention is not limited to the embodiment shown in Fig. 8. Embodiments in which the covering member is a lid member will be described below. However, the covering member in the second aspect is not limited to a lid-shaped one.

Fig. 8 consists of typical drawings of a forming mold in which a forming material has been positioned on the forming surface and a lid member has been positioned over the upper exposed portion thereof. Fig. 8(a) shows the state prior to thermosoftening, and Fig. 8(b) shows the state after thermosoftening. In the embodiment shown in Fig. 8, a ring-shaped support member is positioned between the lid member and the forming mold, and the edge surface in the step portion of the perimeter of the support member fits against the edge surface of the opening in the lid member. When such a support member is not employed, the configuration is as described above with reference to Fig. 5.

The lid member shown in Fig. 8 is a part of a cylindrical shape. Only the bottom surface of the cylindrical shape is open, creating an internal space. The dimensions of the covering member are not specifically limited, but from the perspective of impact resistance and efficient thermal conduction, a thickness of about 1 micrometer to 5 mm, and an internal height of about 5 to 100 mm, particularly 30 to 60 mm, are suitable. As set forth further below, when a metal material layer is provided on the base material, the metal material layer can be formed by a known film-forming method such as plating. In that case, from the perspectives of film-forming properties and the ease of handling of the film that is formed, the thickness of the metal material layer is suitably about 1 mm to 5 mm. When imparting the function of a far infrared ray-blocking filter to the covering member as set forth further below, the thickness of the metal material layer and the thickness of the base material are desirably determined by taking into account the refractive indexes of the metal material layer and base material for the far infrared ray. A covering member comprised of a metal material as set forth further below can be formed by a known molding method such as injection molding.

A step portion is formed inside the lid member shown in Fig. 8. The thickness of the lateral surface from the step portion to the opening is thinner than the lateral surface from the upper surface to the step portion. Making the edge surface of the opening of the covering member thin in this manner reduces the contact surface between the covering member and the support member (the forming mold when a support member is not employed) and increases the pressure per unit area that is exerted on the edge surface of the opening by the weight of the covering member itself, permitting greater air tightness within the covering member. When a support member is employed as shown in Fig. 8 and the area of the edge surface of the opening of the lid member is made small, it becomes possible to reduce the area of contact between the support member and the covering member, thereby reducing the overall size of the support member. Reduction in the size of the support member reduces the amount of thermal expansion of the support member, thereby enhancing the air tightness of the covering member. The edge surface of the opening of the covering member fitting into the forming mold or support member is desirably a smooth surface so as to enhance tightness.

The covering member employed in the method of manufacturing a formed article according to the second aspect comprises a metal material layer in at least a portion thereof. The details of the metal material layer will be described below.

### Metal material layer

The metal material layer is a layer that is comprised of a metal material. The details of the metal material are as set forth in the description of the metal material in the first aspect.

The metal material layer need only be contained in at least a portion of the covering member. To achieve rapid heating to a uniform state by direct exposure to radiant heat or the like from the heat source of the heating furnace, the metal material layer is desirably positioned on the outermost surface of the covering member. In this context, the term "outermost surface of the covering member" means the outermost surface of the covering member (surface to the outside) that comes in direct contact with the atmosphere in the heating furnace.

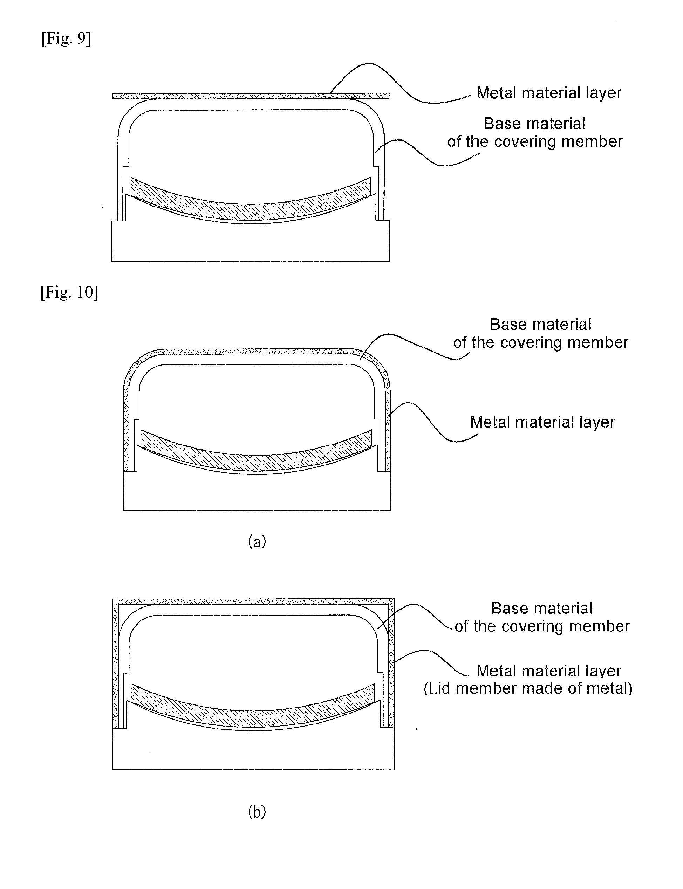

In one embodiment of the covering member, a metal material layer is present on at least a portion of the outermost surface of the covering member. More specifically, a metal material layer is formed on at least a portion of the outside surface of the base material of the covering member. Fig. 9 shows an example of such a covering member. In the covering member shown in Fig. 9, a metal material layer (metal plate) is positioned on a portion (the upper surface) of the outermost surface of the base material of the covering member. In the second aspect, as shown in Fig. 9, the metal material layer can be provided as a separate member from the base material of the covering member, or can be provided integrally by plating or the like. The base material of the covering member and at least a portion of the metal material layer are desirably in a state of tight contact so that thermal conduction from the metal material layer heats the base material of the covering member. Fig. 9 shows an embodiment in which the metal material layer is provided on the upper surface of the outermost surface of the covering member. However, the metal material layer can also be provided on a lateral surface of the covering member. For example, it is possible to provide a cylindrical metal material (metal cylinder) so as to enclose the perimeter of the base material of the covering member.

The metal material layer is heated by radiant heat or the like from the heat source of the heating furnace, thereby functioning as a heat source heating the interior of the covering member. From the perspective of heating efficiency, the metal material layer is desirably provided in the covering member so that there is some period during which the metal material layer is present between the heat source of the furnace and the forming material during heating. For example, when a heating furnace is employed in which the heat source is disposed in the upper portion of the heating furnace, the metal material layer is desirably positioned on at least the upper surface of the covering member. When employing a heating furnace in which the heat source is disposed on a sidewall, the metal material layer is desirably positioned on at least the lateral surface of the covering member.

The covering member is heated by thermal conduction by the atmosphere within the furnace in addition to being heated by radiant heat from the heat source. Thus, to rapidly and uniformly heat the surface of the covering member by radiant heat and conducted heat, the metal material layer desirably covers the entire outermost surface of the covering member. Fig. 10 shows specific examples of such a covering member. As shown in Fig. 10(a), the metal material layer can also be formed so as to tightly adhere to the entire outermost surface of the base material of the covering member, and as shown in Fig. 10(b), the covering member can be comprised of multiple members, and the metal material layer can be provided so that a portion of it does not come into contact with the base material of the covering member. Alternatively, the entire covering member is desirably comprised of a metal material, functioning as a covering member comprised of a metal material.

As shown in Figs. 9 and 10, the metal material layer can be provided on the base material of the covering member. In that case, the same metal material as employed in the metal material layer, a different metal material, or a ceramic material can be employed as the base material of the covering member. The metal materials set forth above by way of example can be employed as the metal material of the base material. A base material that is comprised of a metal material can be obtained by a known molding method such as injection molding.

As set forth above, it is difficult to uniformly heat the forming material with a covering member comprised of a ceramic material. However, a covering member that contains a base material in the form of a ceramic material in addition to a metal material layer permits uniform heating of the forming material. The reasons for this are given below.
For example, in a heating furnace in which heat sources are provided in portions of the interior of the furnace, in a continuous heating furnace in which individual zones are controlled to achieve different temperatures, and the like, the state of heating varies in various parts of the furnace. For example, in a continuous heating furnace in which the temperature is controlled to achieve increasingly higher temperatures in the conveyance direction, the farther an item advances, the higher the temperature to which it is exposed. However, a covering member that is comprised of a ceramic material has low thermal conductivity. Thus, a long period is required for heat to be conducted throughout the covering member. That is, in a covering member comprised of a ceramic material, it is difficult to rapidly respond to the external temperature distribution.
By contrast, in a covering member comprising a metal material layer on a base material comprised of a ceramic material, the metal material layer is exposed to the external temperature distribution before the ceramic material. Since the temperature of the metal material layer can be rapidly rendered uniform regardless of the external temperature distribution, the metal material layer of uniform temperature can heat the ceramic material as a heat source. The result is that it becomes possible to uniformly heat the ceramic material regardless of the external temperature distribution. When a ceramic base material is uniformly heated in this manner, there are not large differences in temperature in various portions of the base material, so the base material can function as a heat source capable of uniform heating to uniformly heat the forming material that has been positioned within the covered space.

A ceramic material with good heat resistance is desirably employed as the ceramic base material. Details of such ceramic materials are as described for the ceramic materials capable of constituting the covering member in the first aspect set forth above. A ceramic base material can be formed by powder metallurgy, for example. Reference can be made to paragraph [0021] of WO2007/063735 for the details. The upper inside surface of a ceramic base material can be processed to prevent particle scattering. The details are described in paragraphs [0022] to [0023] in WO2007/063735.

The higher the thermal conductivity of a material, the more quickly it cools. Accordingly, from the perspective of retaining heat of the interior of the covering member (the covered space), a material of lower thermal conductivity than the metal material constituting the metal material layer is desirably employed as the base material. However, materials with excessively low thermal conductivity are difficult to uniformly heat even when a metal material layer is provided. Thus, from the perspectives of uniform heating and heat retention properties, the thermal conductivity of the base material is desirably 3 to 170 W/mk as measured at 25°C. Examples of such materials with low thermal conductivity are the ceramic materials set forth above.

Providing a metal material layer on a base material comprised of a ceramic material such as has been set forth above is desirable to enhance the heat retention property for the following reasons, as well.
The radiant heat that is radiated into the covered space by the covering member is gradually re-radiated (emitted) to the exterior as far infrared radiation energy. Since ceramic materials generally have lower transmittance to far infrared ray than metal materials, they can function as far infrared ray-blocking layers (far infrared ray-blocking filters). Thus, far infrared radiation energy can be prevented from being re-radiated to the exterior and compromising the heat retention property.

In the second aspect, the thickness of the metal material layer and ceramic base material can be adjusted to impart the function of a far infrared ray-blocking filter to the covering member, thereby preventing re-radiation described above and enhancing the heat retention property. The principle behind such a multilayer-structure covering member functioning as a far infrared ray-blocking filter is identical to that described for the covering member that can be used in the first aspect above. Accordingly, in a covering member having a metal material layer on a ceramic base material, either the ceramic base material or the metal material layer is made a high refractive index layer and the other is made a low refractive index layer. When the thicknesses of the ceramic base material and the metal material layer are determined from the above-described equations based on the refractive indexes of these two layers for the far infrared ray, it becomes possible to impart the function of a far infrared ray-blocking filter to the covering member. The wavelength region of far infrared ray, as set forth above, is about 3 to 1,000 micrometers. Thus, the optical film thickness (the refractive index multiplied by the physical film thickness) of each of the ceramic base material and the metal material layer desirably falls within a range of 0.75 to 250 micrometers. In that case, the outermost layer coming into contact with the covered space can be either a high refractive index or low refractive index layer.

In the above-described embodiments, a covering member comprised of a single layer of metal material and a covering member comprised of two layers in the form of a metal material layer and base material have been described. However, the covering member employed in the second aspect is not limited to these embodiments. For example, it is naturally possible to employ a covering member comprised of a multilayer structure with a total of three or more layers in the form of two or more metal material layers and/or two or more base material layers.

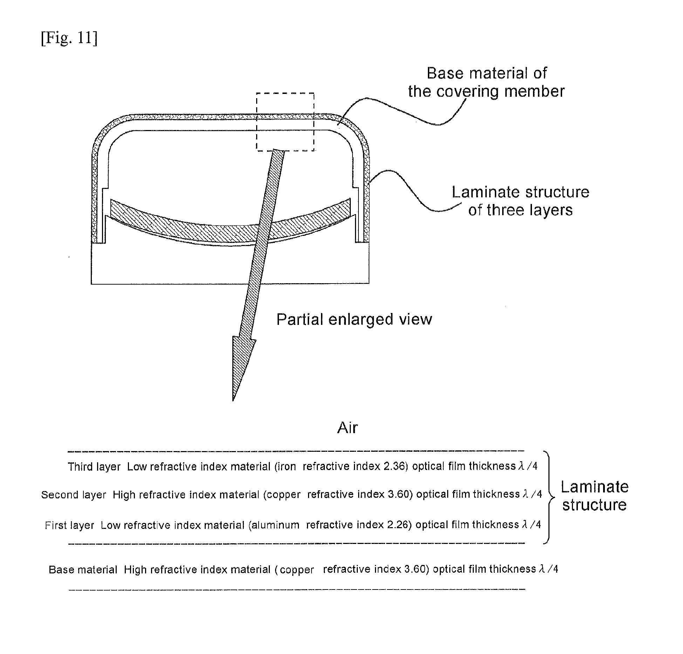

When the covering member is comprised of a multilayer structure of two or more layers, it is desirable to provide at least one set of a high refractive index material layer with a high refractive index for the far infrared ray and a low refractive index material layer with a low refractive index for the far infrared ray to impart the function of a far infrared ray-blocking filter described above to the covering member. The function of a far infrared ray-blocking filter normally increases with the number of set of the high refractive index layer and the low refractive index layer. Thus, it is preferable to provide two or more of the sets to achieve a laminate of alternating the high refractive index layer and the low refractive index layer. Thus, when the covering member is of a multilayer structure in the second aspect, it is desirable for the covering member to have a structure comprised of multiple layers of different refractive indexes for the far infrared ray regardless of whether or not the base material is a ceramic. In that case, at least one of the multiple layers is the above metal material layer. In that case, the optical film thickness of each layer desirably falls within a range of 0.75 to 250 micrometers, as set forth above. Fig. 11 shows an example of the layer structure of such a covering member. The covering member shown in Fig. 11 contains two sets of a high refractive index layer and a low refractive index layer. In Fig. 11, λ denotes the wavelengths of the far infrared region (about 3 to 1,000 micrometers), and the refractive indexes are for the λ. Fig. 11 shows an embodiment in which all the layers, including the base material, are metal material layers. However, the second aspect is not limited to the embodiment shown in Fig. 11. A covering member in which at least one of the layers from among the base material and the laminate structure is comprised of a material other than a metal material, such as a ceramic, can be employed. The difference in the refractive indexes of adjacent layers for the far infrared ray can be, for example, equal to or more than 1.00 and equal to or less than 2.00. However, this difference is not specifically limited. The methods of adjusting the refractive indexes of metal materials and ceramic materials are as described for the first aspect above.

### Forming material

The details of the forming material the upper surface of which is formed into a desired shape by thermosoftening in the method of manufacturing a formed article according to the second aspect is as described for the first aspect above. In particular, in the embodiment that forms a forming material with an upper surface having a rotationally symmetric shape with the geometric center as the axis of symmetry, to increase the uniformity of heating of the forming material and achieve a more balanced heat distribution, the upper surface of the covering member that faces to the upper surface of the forming material desirably also has a rotationally symmetric shape with the geometric center as the axis of symmetry, and the forming material is preferably positioned so that the geometric centers of the upper surface of the covering member and the upper surface of the forming material lie along the same axis. It is preferable to employ a covering member containing on the upper surface thereof a metal material layer having a rotationally symmetrical shape with the geometric center as the axis of symmetry, and for the forming material to be positioned so that the geometric center of the metal material layer and the geometric center of the forming material lie along the same axis.

### Forming method

The method of forming the forming material in the second aspect will be described next.
After using the covering member to cover the exposed portion on the forming surface side of the forming mold with a forming material positioned on the forming surface thereof, the forming material is heated on the forming mold to a temperature permitting deformation. The forming mold is as described for the first aspect above. In the second aspect, when a forming mold having through-holes such as that described in WO2007/063735 is employed and aspiration is conducted through the through holes during forming, ventilation holes can be formed in a portion of the metal material layer or a metal material layer with a fine mesh-like structure can be formed, in order to ensure ventilation. Further, when the heat source of the heating furnace is positioned beneath the forming mold, as described for the first aspect, it is desirable to provide a metal material layer on the lower outermost surface of the forming mold.

The temperature permitting deformation and the heating method are as described for the first aspect. As set forth above, in the second aspect, the forming material is heated through the covering member. Thus, it is possible to achieve uniform heating even when employing a heating furnace having a large internal temperature distribution.

Specific embodiments of the method of manufacturing a formed article according to the second aspect will be described next. However, the second aspect is not limited to the following embodiments.
First, desirably in a clean room, a forming mold is positioned with its forming surface facing upward. The details when employing the support member are as described for the first aspect.

Next, the covering member is desirably positioned to fit against the support member. After using the covering member to cover the exposed portion on the forming surface side of the forming mold on which the forming material has been positioned, the assembly is conveyed into an electric furnace from the clean room, the combination of the forming mold, support member, forming material, and covering member is placed on the carrying base of the electric furnace, and thermoprocessing is conducted by means of the electric furnace. When employing a continuous heating furnace in the second aspect, the heater is normally positioned above the conveyance route through the furnace. However, heat sources can also be positioned beneath the conveyance route or on the sidewalls.
The details of specific embodiments of the method of manufacturing a formed article according to the second aspect are as described for the specific embodiments of the method of manufacturing a formed article according to the first aspect above.

The formed article obtained by the method of manufacturing a formed article according to the second aspect can also be used as an eyeglass lens-casting mold. Alternatively, after a portion such as the perimeter is removed, it can be employed as an eyeglass lens-casting mold. The details of embodiments in which the formed article obtained or a portion thereof is employed as an eyeglass lens-casting mold are as described for the first aspect above.

The second aspect also relates to a forming device which is employed in a forming method forming an upper surface of a forming material comprised of a softening substance into a desired shape by heating the forming material within a heating furnace in a state where the forming material is positioned on a forming surface of a forming mold to a temperature permitting deformation of the forming material to bring a lower surface of the forming material into tight contact with the forming surface. The forming device according to the second aspect conducts the forming while an exposed portion on the forming surface side of the forming mold on which the forming material has been positioned is covered with a covering member, and, as the covering member, a covering member comprising a metal material layer in at least a portion thereof is employed.
The forming device according to the second aspect can contain multiple sets of forming materials and covering members. The details of the forming device according to the second aspect are as described above. The forming device according to the second aspect is capable of uniformly heating the forming material, thereby making it possible to manufacture a high-quality formed article, such as an eyeglass lens-casting mold capable of molding a high-quality eyeglass lens in which astigmatism is inhibited or reduced.

The present invention further relates to a method of manufacturing an eyeglass lens comprising the manufacturing of a formed article by the method of manufacturing a formed article according to the first or second aspect, or with the forming device according to the first or second aspect, and the manufacturing of an eyeglass lens by cast polymerization with the formed article manufactured or a portion of the formed article manufactured as a casting mold. As set forth above, the method of manufacturing a formed article and the forming device of the present invention permit the uniform heating of a forming material, thus making it possible to obtain a high-quality formed article. Using the formed article obtained, or a portion thereof, as an eyeglass lens-casting mold, it is possible to obtain a high-quality eyeglass lens in which astigmatism is inhibited or reduced.

### EXAMPLE

The present invention will be described below based on Examples. However, the present invention is not limited to the embodiments shown in Examples.

### 1. Example and comparative example relating to the first aspect

### [Example 1]

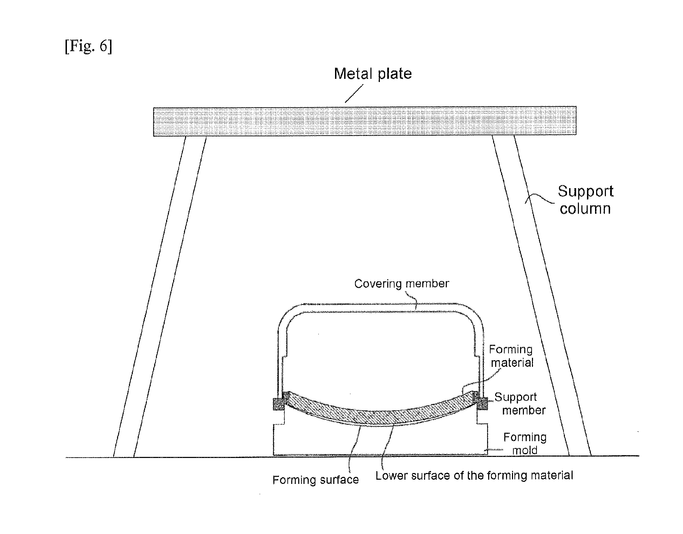

Multiple pieces of glass material were thermoprocessed by conveyance through a continuous heating furnace while separately positioned on the forming surfaces of forming molds. A glass material, covering member, and metal plate were positioned on or above the forming mold as shown in Fig. 6. The metal plate, supported by support columns, and the forming mold on which had been placed the glass material and covering member were positioned on a belt conveyor so as to be conveyed through the continuous heating furnace while maintaining these positional relations. Viewed from vertically above in this state, the covering member was covered over by the metal plate and could not be seen.

A glass material with a rotationally symmetric shape having the geometric center of the upper surface as axis of symmetry was employed as the glass material.
A disk-shaped copper plate 5 mm in thickness (a flat plate with two flat surfaces) was employed as the metal plate. The distance from the lower surface of the metal plate to the geometric center of the upper surface of the forming material positioned within the covering member was about 50 mm. During conveyance through the furnace, the support column height was set so that the metal plate was positioned such that the distance from a halogen heater positioned on the inside upper surface of the furnace to the upper surface of the metal plate was about 100 mm.
As shown in Fig. 6, a lid member that had been obtained by forming a ceramic comprising equal to or more than 99 percent of SiO₂, Al₂O₃, and MgO, and an additional component in the form of K₂O, by powder metallurgy into a lid shape with both an exterior upper surface and an interior upper surface being flat was employed as the covering member. The thickness of the lid member was about 5 mm and the interior height of the lid member was about 50 mm.
In the continuous heating furnace, the forming mold on which the covering member and glass material had been positioned and the metal plate that had been positioned above the forming mold by means of support columns surrounding the forming mold so that it remained constantly in a position over the glass material within the furnace were sequentially conveyed through seven continuous zones the temperatures of which were controlled as set forth below. To make it possible to control the temperature in each zone as described further below, multiple halogen lamps were positioned above within each zone.

### (A) Preheating zone

The forming mold was passed through this zone, the temperature of which was controlled so as to maintain the glass material at a constant temperature of about 25°C, over about 90 minutes.

### (B) Rapid heating and temperature-rising zone

The forming mold was passed through this zone, the temperature of which was controlled so as to heat the glass material at a heating rate of about 4°C/min from about 25°C to a temperature 50°C below (also called "T1" hereinafter) the glass transition temperature (also referred to as "Tg" hereinafter) of the glass material, over about 90 minutes.

### (C) Slow heating and temperature-rising zone

The forming mold was passed through this zone, the temperature of which was controlled so as to heat the glass material at a heating rate of about 2°C/min from temperature T1 to a temperature about 50°C below the glass softening point (also called "T2" hereinafter) but equal to or higher than the Tg of the glass material, over about 120 minutes.

### (D) Constant temperature maintenance zone

The forming mold was passed through this zone, the temperature of which was controlled so as to maintain the temperature of the glass material that had been heated at temperature T2 around temperature T2, over about 60 minutes.

### (E) Slow cooling zone

The forming mold was passed through this zone, the temperature of which was controlled so as to cool the glass material at a cooling rate of 1°C/min to a temperature 100°C below Tg (also called "T3" hereinafter), over about 300 minutes.

### (F) Rapid cooling zone

The glass material was cooled to about 200°C at a cooling rate of about 1.5°C/min by passing it through this zone.

### (G) Natural cooling zone

In this zone, natural cooling was conducted to cool the glass material to room temperature.

Subsequently, the formed article that was discharged to the exterior of the furnace was employed as a casting mold and a progressive dioptric power lens both surfaces of which were aspherical was obtained by cast polymerization. The outer diameter of the lens that was obtained was 75 ϕ and the surface average base curve was 4 D. The lens obtained was held to the lens holder in a lens meter and the astigmatism in the optical center or the dioptric power measurement reference point was measured as 0.01 D. The lens meter employed in the present Example was of the transmission type, but it was also possible to calculate the astigmatism based on analysis of the surface dioptric power from the results of measurement by a reflecting type surface dioptric power device or shape measuring device.

### [Comparative Example 1]

With the exception that no metal plate was employed, a formed article was prepared and the formed article obtained was used to conduct cast polymerization by the same methods as in Example 1. Measurement revealed the astigmatism of the lens obtained by cast polymerization to be 0.06 D.

### 2. Examples and comparative example relating to the second aspect

### [Example 2]

The lid member shown in Fig. 10(a) was employed and a glass material was thermoformed in a continuous heating furnace.

The lid member employed was prepared by plating copper over the entire outer surface of a base material that was comprised of equal to or more than 99 percent of SiO₂, Al₂O₃, and MgO, and contained K₂O as an additional component, that had been molded into the lid shape shown in Fig. 10(a) by powder metallurgy. The thickness of the copper plating layer was about 1 mm, the thickness of the lid member including the copper plating layer was about 5 mm, and the interior height of the lid member was about 50 mm.
The upper surface of the lid member including the copper plating layer and the upper surface of the glass material both had rotationally symmetric shapes with the geometric center as the axis of symmetry. The lid member was disposed on the forming mold so that the geometric center of the upper surface of the lid member including the copper plating layer and the geometric center of the upper surface of the glass material were positioned along the same axis in the vertical direction.
In the continuous heating furnace, the forming mold on which the lid member and glass material were disposed was sequentially conveyed through seven continuous zones in which the temperature was controlled in the same manner as in Example 1.
Subsequently, the formed article that was discharged to the exterior of the furnace was employed as a casting mold and a progressive dioptric power lens both surfaces of which were aspherical was obtained by cast polymerization. The outer diameter of the lens that was obtained was 75 ϕ and the surface average base curve was 4 D. The lens obtained was held to the lens holder in a lens meter and the astigmatism in the optical center or the dioptric power measurement reference point was measured as 0.01 D.

### [Example 3]

With the exception that a lid member comprised entirely of copper that was molded by injection molding was employed, a formed article was prepared and cast polymerization was conducted with the formed article obtained by the same methods as in Example 2. Measurement revealed the astigmatism of the lens obtained by cast polymerization to be 0.02 D.

### [Example 4]

With the exception that a lid member with a disk-like copper plating layer (center-symmetric shape) formed on the upper surface and no copper plating layer formed on the outermost lateral surface of a base material comprised of ceramic was employed, a formed article was prepared and cast polymerization was conducted with the formed article obtained by the same methods as in Example 2. Measurement revealed the astigmatism of the lens obtained by cast polymerization to be 0.03 D.

### [Comparative Example 2]

With the exception that a ceramic base material on which no copper plating layer was formed was employed as the lid member, a formed article was prepared and cast polymerization was conducted with the formed article obtained by the same methods as in Example 2. Measurement revealed the astigmatism of the lens obtained by cast polymerization to be 0.06 D.

### Evaluation results

The determination standard for the astigmatism of a finished lens is normally considered to be an absolute value of equal to or less than 0.09 D. However, from the perspective of ease of handling during the step of using finished lenses to manufacture eyeglasses, the residual tolerance that is permitted as manufacturing error is about equal to or less than 0.03 D.
The astigmatism of the lenses obtained in Comparative Examples 1 and 2 was within the above determination standard, but was outside the range of the residual tolerance permitted as a manufacturing error. Thus, care would have to be exercised in handling in the course of manufacturing eyeglasses with the lenses obtained in Comparative Examples 1 and 2.
By contrast, the astigmatism of the finished lenses obtained in Examples 1 to 4 was within the determination standard, making it possible to obtain progressive dioptric power lenses both surfaces of which were aspherical with astigmatism falling within the range of residual tolerance permitted as manufacturing error.
Based on these results, the present invention provided a lens-casting mold permitting the manufacturing of eyeglass lenses that afforded good wear sensation by inhibiting the astigmatism that was unnecessary in the correction of eyeglass lenses. An eyeglass lens-casting mold that was capable of molding eyeglass lenses in which astigmatism was inhibited was obtained without rotating the metal plate in Example 1. However, in cases where the energy differential of the radiant heat radiated by heat sources variously disposed within the furnace was large, it was desirable to rotate the metal plate as described above.
The reasons the greatest inhibiting effect on astigmatism was achieved in Example 2 among Examples 2 to 4 were thought to be as follows: (1) Since a copper plating layer (metal material layer) was formed over the entire outermost surface of the lid member, a uniform temperature was quickly achieved over the entire surface of the copper plating layer in rapid response to changes in temperature in various zones in which the temperature was controlled as set forth above. (2) Due to the heat retention effect of the ceramic material, change in the temperature within the lid member was inhibited.

### INDUSTRIAL APPLICABILITY

The present invention is useful in the field of manufacturing eyeglass lenses.

## Claims

1. A method of manufacturing a formed article forming an upper surface of a forming material comprised of a thermosoftening substance into a desired shape by heating the forming material in a state where the forming material is positioned on a forming surface of a forming mold to a temperature permitting deformation of the forming material to bring a lower surface of the forming material into tight contact with the forming surface, wherein
the heating is conducted by positioning the forming mold, on which the forming material has been positioned, beneath heat source(s) radiating radiant heat in a state where a plate-shaped member the outermost surface of which is comprised of a metal material is positioned above the upper surface of the forming material.

2. The method of manufacturing a formed article according to claim 1, wherein the heating is conducted by introducing the forming mold, on which the forming material has been positioned, into a heating furnace and causing the forming mold to sequentially pass beneath a multiple number of the heat sources positioned in the upper part within the furnace.

3. The method of manufacturing a formed article according to claim 2, wherein the plate-shaped member is displaced together with the forming mold within the furnace so that the plate-shaped member is constantly positioned above the upper surface of the forming material.

4. A forming device which is employed in a forming method forming an upper surface of a forming material comprised of a thermosoftening substance into a desired shape by heating the forming material in a state where the forming material is positioned on a forming surface of a forming mold to a temperature permitting deformation of the forming material to bring a lower surface of the forming material into tight contact with the forming surface, the forming device comprising:
heat source(s) capable of radiating radiant heat;
a plate-shaped member the outermost surface of which is comprised of a metal material, which is positioned above the upper surface of the forming material and beneath the heat source.

5. The forming device according to claim 4, which comprises a heating furnace comprising a multiple number of the heat sources positioned in the upper part thereof, and wherein the heating furnace further comprises a conveying means which conveys the forming mold sequentially beneath a multiple number of the heat sources.

6. The forming device according to claim 5, wherein the heating furnace comprises a displacing means which displaces the plate-shaped member together with the forming mold so that the plate-shaped member is constantly positioned above the upper surface of the forming material.

7. A method of manufacturing a formed article forming an upper surface of a forming material comprised of a thermosoftening substance into a desired shape by heating the forming material within a heating furnace in a state where the forming material is positioned on a forming surface of a forming mold to a temperature permitting deformation of the forming material to bring a lower surface of the forming material into tight contact with the forming surface, wherein
the forming is conducted while an exposed portion on the forming surface side of the forming mold on which the forming material has been positioned is covered with a covering member, and
at least a portion of the covering member comprises a metal material layer.

8. The method of manufacturing according to claim 7, wherein the metal material layer is positioned on an outermost surface of the covering member.

9. The method of manufacturing according to claim 7 or 8, wherein
the upper surface of the forming material prior to the forming has a rotationally symmetric shape with a geometric center as an axis of symmetry,
the metal material layer has a rotationally symmetric shape with a geometric center as an axis of symmetry, and is included in the upper surface of the covering member,
the forming material is positioned so that the geometric center of the metal material layer and the geometric center of the upper surface of the forming material lie along the same axis.

10. A forming device which is employed in a forming method forming an upper surface of a forming material comprised of a softening substance into a desired shape by heating the forming material within a heating furnace in a state where the forming material is positioned on a forming surface of a forming mold to a temperature permitting deformation of the forming material to bring a lower surface of the forming material into tight contact with the forming surface, wherein
the forming is conducted while an exposed portion on the forming surface side of the forming mold on which the forming material has been positioned is covered with a covering member, and
at least a portion of the covering member comprises a metal material layer.

11. The forming device according to claim 10, wherein the metal material layer is positioned on an outermost surface of the covering member.

12. The forming device according to claim 10 or 11, wherein
the upper surface of the forming material prior to the forming has a rotationally symmetric shape with a geometric center as an axis of symmetry,
the metal material layer has a rotationally symmetric shape with a geometric center as an axis of symmetry, and is included in the upper surface of the covering member,
the forming material is positioned so that the geometric center of the metal material layer and the geometric center of the upper surface of the forming material lie along the same axis.

13. The method of manufacturing according to any of claims 1 to 3 and 7 to 9, wherein an eyeglass lens-casting mold is manufactured as the formed article.

14. The forming device according to any of claims 4 to 6 and 10 to 12, wherein an eyeglass lens-casting mold is formed as the formed article.

15. A method of manufacturing an eyeglass lens comprising:
manufacturing a formed article by the method of manufacturing according to any of claims 1 to 3 and 7 to 9, or with the forming device according to any of claims 4 to 6 and 10 to 1; and
manufacturing an eyeglass lens by cast polymerization with the formed article manufactured or a portion of the formed article manufactured as a casting mold.
